# EUROPEAN PATENT APPLICATION

(11) **EP 4 461 442 A1**
(43) Date of publication of application: **13.11.2024**
(21) Application number: 24174527.2
(22) Date of filing: 07.05.2024
(51) Int. Cl.: B22F 12/44, B22F 12/47, B22F 12/45, B33Y 30/00, B22F 10/28, B33Y 10/00, G02B 27/09

(54) **PRINT HEADS FOR ADDITIVE MANUFACTURING APPARATUSES**

(30) Priority: 10.05.2023 US 202363465388 P
(71) Applicant: General Electric Company, Schenectady, NY 12345 (US)
(72) Inventor: SIMMERMON, David Scott, Schenectady, 12345 (US); STEELE, William Joseph, Schenectady, 12345 (US); THOMPSON, Brian Thomas, Schenectady, 12345 (US)
(74) Representative: Hafner & Kohl PartmbB

(57) **Abstract**

Disclosed herein are print heads (104) for an additive manufacturing apparatus (10). The print heads (104) include a housing (130). A projection element (116) is disposed within the housing (130) and is configured to receive one or more laser beams (106) from a beam emitter (108) and project a plurality of projected laser beams (118) in a pattern (122). A consolidating optic (124) is disposed within the housing (130) and is located below the projection element (116). The consolidating optic (124) is configured to consolidate the pattern (122) of the plurality of projected laser beams (118) into a consolidated pattern of projected laser beams (126).

## Description

### CROSS-REFERENCE TO RELATED APPLICATION

The present specification claims the benefit of U.S. Provisional Patent Application Serial No. 63/465,388 filed May 10, 2023 and entitled "Print Modules for Additive Manufacturing Apparatuses," the entirety of which is incorporated by reference herein.

### TECHNICAL FIELD

The present specification generally relates to additive manufacturing apparatuses and, more specifically, to self-contained print heads which deliver one or more laser beams to a build plane of the additive manufacturing apparatus.

### BACKGROUND

Additive manufacturing apparatuses may be utilized to build an object from a build material, such as organic or inorganic powders, in a layer-wise manner. An example of additive manufacturing processes includes laser powder bed fusion systems. In some applications, additive manufacturing apparatuses use one or multiple scanner assemblies which each include a fiber laser, collimator, adjustable beam focus assembly, and mirrors mounted on galvanometers to focus and scan a laser beam over a build plane and melt or fuse the build material at the build plane. These scanner assemblies are expensive and are difficult to align and maintain. Consolidation rates of the build material can only be increased marginally because of the heat loads and soot that are generated by adding additional scanner assemblies.

Accordingly, there is a need for additive manufacturing apparatuses that include a more economical, self-contained print head utilized to manipulate multiple laser beams to melt or fuse a build material at a build plane.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a side view of an additive manufacturing apparatus including a print head, according to one or more embodiments shown and described herein;
FIG. 2 schematically depicts a perspective view of a print assembly including the print head of FIG. 1, according to one or more embodiments shown and described herein;
FIG. 3 schematically depicts a side view of the print head of FIG. 2 used with the additive manufacturing apparatus of FIG. 1, according to one or more embodiments shown and described herein;
FIG. 4 schematically depicts a top view of an image plane and a consolidated image plane generated by a projection element and a consolidating optic, respectively, of the print head of FIG. 3, according to one or more embodiments shown and described herein;
FIG. 5 schematically depicts a side view of another print head used with the additive manufacturing apparatus of FIG. 1, according to one or more embodiments shown and described herein;
FIG. 6 schematically depicts a side view of another print head used with the additive manufacturing apparatus of FIG. 1, according to one or more embodiments shown and described herein;
FIG. 7 schematically depicts a side view of another print head used with the additive manufacturing apparatus of FIG. 1, according to one or more embodiments shown and described herein;
FIG. 8 schematically depicts a side view of another print head used with the additive manufacturing apparatus of FIG. 1, according to one or more embodiments shown and described herein;
FIG. 9 schematically depicts a side view of another print head used with the additive manufacturing apparatus of FIG. 1, according to one or more embodiments shown and described herein;
FIG. 10 schematically depicts a side view of another print head used with the additive manufacturing apparatus of FIG. 1, according to one or more embodiments shown and described herein; and
FIG. 11 schematically depicts a flow chart of a method of delivering multiple laser beams to a build plane of the additive manufacturing apparatus of FIG. 1, according to one or more embodiments shown and described herein.

### DETAILED DESCRIPTION

Embodiments described herein are directed to a self-contained print head that includes one or more light sources of various powers and/or wavelengths. The print head can be used in conjunction with an additive manufacturing apparatus and utilizes multiple laser beams to fuse a powdered build material instead of a traditional single beam per scanner approach. This process is more energy efficient and produces less soot in the additive manufacturing apparatus. Moreover, compared to traditional scanners, this process is less expensive, more robust, and can be calibrated prior to installation. In addition, the print head is modular such that a build area of the additive manufacturing apparatus can be increased by adding additional modules. Additional modules can be added without the concern of soot and with a reduction of ejected material from the weld zone because only energy sufficient to fuse powder is added. As such, the print head is scalable to increase consolidation rates of the powdered build material and to increase the size of parts which may be manufactured by the additive manufacturing apparatus. The beam shaping, combining, steering, and delivery optics for powder processing and pre- and post-heating of the weld zone are included within the print head.

The print head generally includes a housing, a beam emitter for generating one or more laser beams, a projection element disposed within the housing which is configured to receive the one or more laser beams and project a plurality of laser beams in a pattern, and a consolidating optic configured to consolidate the pattern of the plurality of laser beams into a consolidated pattern of laser beams. In some embodiments, the beam emitter is disposed within the housing. In other embodiments, the beam emitter is a laser source disposed outside of the housing and coupled to a delivery medium (e.g., a fiber) which delivers the one or more laser beams to the housing. In further embodiments, the beam emitter is a laser source disposed outside of the housing and the beam emitter delivers the one or more laser beams to the housing through free space. The print head provides a method for delivering multiple laser beams to a build plane of an additive manufacturing apparatus. Various embodiments of the method for delivering multiple laser beams to a build plane and the print head and the operation of the method for delivering multiple laser beams to a build plane and the print head are described in more detail herein. Whenever possible, the same reference numerals will be used throughout the drawings to refer to the same or like parts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

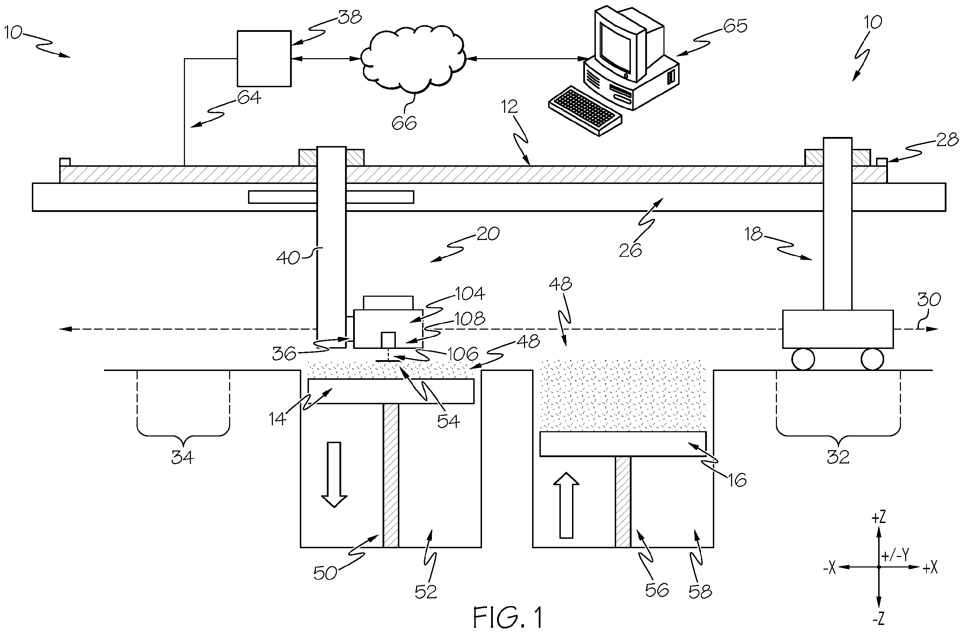

Referring now to FIG. 1, a manufacturing apparatus 10 is illustrated according to one or more embodiments described herein. The manufacturing apparatus 10 may generally include a build area or build platform 14, a supply platform 16, a recoat assembly 18, and a printing assembly 20. The recoat assembly 18 and the printing assembly 20 are coupled to a rail 26 of the manufacturing apparatus 10 and are configured to translate along the rail 26 in response to an actuation of a first actuator assembly 28. The first actuator assembly 28 may be constructed to facilitate independent control of the recoat assembly 18 and the printing assembly 20 along a working axis 30 of the manufacturing apparatus 10. The working axis 30 is also referred to herein as the "longitudinal axis" (i.e., extending along the +/- X axis of the coordinate axes as depicted in the figures). This allows for the recoat assembly 18 and the printing assembly 20 to traverse the working axis 30 of the manufacturing apparatus 10 in the same direction and/or in opposite directions and for the recoat assembly 18 and the printing assembly 20 to traverse the working axis 30 of the manufacturing apparatus 10 at different speeds and/or the same speed.

In the embodiments described herein, the build platform 14, the supply platform 16, the recoat assembly 18, and the printing assembly 20 are positioned in series along the working axis 30 of the manufacturing apparatus 10 between a home position 34 of the printing assembly 20, located proximate an end of the working axis 30 in the -X direction, and a home position 32 of the recoat assembly 18, located proximate an end of the working axis 30 in the +X direction. In embodiments, the build platform 14 is positioned between home position 34 of the printing assembly 20 and the supply platform 16 along the working axis 30 of the manufacturing apparatus 10.

In embodiments, a second actuator assembly 36 may be constructed to facilitate independent control of the printing assembly 20 along a latitudinal axis (i.e., extending along the +/- Y axis of the coordinate axes as depicted in the figures), which is generally perpendicular to the longitudinal axis (i.e., the working axis 30). The first actuator assembly 28 and the second actuator assembly 36 are generally referred to as a print head position control assembly. That is, the print head position control assembly includes the first actuator assembly 28 configured to move the print head along the longitudinal axis and the second actuator assembly 36 configured to move the print head along a latitudinal axis. The print head position control assembly may be controlled via signals generated by a control system 38 such as an electronic control unit. The electronic control unit may include a processor and a non-transitory computer readable memory.

The printing assembly 20 comprises, among other features, a support bracket 40 and one or more print heads 104. The support bracket 40 is movably coupled to the rail 26 and the first actuator assembly 28 of the manufacturing apparatus 10 while the print head 104 is movably coupled to the support bracket 40 via the second actuator assembly 36.

As will be described below, the manufacturing apparatus 10 is used to scan a build plane 54 of one or more workpieces (not shown) positioned within the manufacturing apparatus 10 with one or more electromagnetic radiation beams 106 (e.g., a laser beam(s)) emanating from the print head 104. Moreover, the manufacturing apparatus 10 is used to additively print (i.e., using an additive manufacturing technique(s)) one or more layers on each scanned workpiece.

As used herein, the terms "additively manufacturing" or "additive manufacturing techniques or processes" refer to manufacturing processes in which successive layers of material are deposited on top of each other to build-up, layer-by-layer, a three-dimensional component. The successive layers are melted or fused together to form a monolithic or integral component.

In several embodiments, the manufacturing apparatus 10 uses a powder bed fusion (PBF) technique, such as direct metal laser melting (DMLM) or directed metal laser sintering (DMLS). In such embodiments, layers of the workpiece are additively printed by melting or fusing a first layer of a build material or powder 48 to the build plane 54, melting or fusing a second layer of powder on top of the first layer, and so on. However, in some embodiments, the workpiece may be additively printed by melting or fusing a single layer of powder to the build plane 54. Furthermore, in alternative embodiments, the manufacturing apparatus 10 may use any other suitable additive manufacturing techniques or processes.

The recoat assembly 18 is constructed to facilitate a distribution of the powder 48 over the build platform 14 and the supply platform 16. The build platform 14 is coupled to a build platform actuator 50 to facilitate raising and lowering the build platform 14 relative to the working axis 30 of the manufacturing apparatus 10 in a vertical direction (i.e., a direction parallel to the +/- Z axis of the coordinate axes depicted in the figures). The build platform 14 and build platform actuator 50 are positioned in a build receptacle 52 located below the working axis 30 (i.e., in the -Z direction of the coordinate axes depicted in the figures) of the manufacturing apparatus 10. During operation of the manufacturing apparatus 10, the recoat assembly 18 fills the build receptacle 52 with powder 48 until the powder 48 forms a build plane (indicated by the depicted line) 54. Next, the recoat assembly 18 spreads a layer of the powder 48 across the build plane 54. The layer of powder 48 is then melted or fused along the build plane 54 using the electromagnetic radiation beam(s) 106 to form a first layer(s) of a workpiece. Thereafter, the build platform 14 is lowered (e.g., as indicated by the arrow) before the recoat assembly 18 spreads another layer of the powder 48 across the build plane 54. This layer may then be melted or fused to the first layer(s) using the one or more laser beams 106 to form a second layer(s) of the workpiece and so on.

Still referring to FIG. 1, the supply platform 16 is coupled to a supply platform actuator 56 to facilitate raising and lowering the supply platform 16 relative to the working axis 30 of the manufacturing apparatus 10 in a vertical direction (i.e., a direction parallel to the +/- Z axis of the coordinate axes depicted in the figures). The supply platform 16 and supply platform actuator 56 are positioned in a supply receptacle 58 located below the working axis 30 (i.e., in the Z direction of the coordinate axes depicted in the figures) of the manufacturing apparatus 10. During operation of the manufacturing apparatus 10, the supply platform 16 is raised relative to the supply receptacle 58 and towards the working axis 30 of the manufacturing apparatus 10 by action of the supply platform actuator 56 after a layer of powder 48 is distributed from the supply platform 16 to the build platform 14.

The printing assembly 20 is constructed to direct one or more laser beams 106 over the layer of powder 48 on the build platform 14 as the printing assembly 20 traverses the build platform 14 along the working axis 30 of the manufacturing apparatus 10. In general, the print head 104 generates and directs the one or more laser beams 106 at the build plane 54, which allows the powder 48 spread across the build platform 14 to be melted/fused.

As shown, in several embodiments, each print head 104 includes a beam emitter 108. More specifically, as discussed in further detail below, the beam emitter 108 emits one or more laser beams 106 which is ultimately directed at a specific location on the build plane 54. In this respect, when additively printing the workpiece, the print head 104 scans the laser beam 106 over the portion of the build plane 54 at which it desires to melt or fuse the powder 48 to form a layer(s) of the workpiece. Moreover, as discussed in further detail below, each print head 104 may include one or more components configured to collimate, focus, and direct the emitted laser beam 106.

The manufacturing apparatus 10 may include any suitable number of print heads 104. For example, in the illustrated embodiment, the manufacturing apparatus 10 includes one print head 104. However, in alternative embodiments, the manufacturing apparatus 10 may include two print heads 104 or three or more print heads 104. The multiple print heads 104 can be arranged in a variety of configurations including linearly and/or staggered along the X and/or Y axis directions.

Still referring to FIG. 1, the manufacturing apparatus 10 may further include a control system 38 communicatively coupled to the first actuator assembly 28, the second actuator assembly 36, the recoat assembly 18, and/or the printing assembly 20. In embodiments, the control system 38 is coupled to the manufacturing apparatus 10 via a communication conduit 64. However, it should be understood that in other embodiments the control system 38 may be communicatively coupled to the manufacturing apparatus 10 via various other means or systems, such as, for example, through a wireless connection. The control system 38, which may also be referred to as an electronic control unit, comprises a processor and a non-transitory memory that includes computer readable and executable instructions stored thereon. Any action of the manufacturing apparatus 10, including the actions described herein, may be caused to be performed by the computer readable and executable instructions stored in the non-transitory memory of the control system 38 when executed by the processor of the control system 38. For example, one or more actuators may be actuated by the computer readable and executable instructions stored in the non-transitory memory of the control system 38 when executed by the processor of the control system 38 to cause the printing assembly 20 to operate.

In embodiments, the control system 38 may be further communicatively coupled to a computing device 65, optionally via a network 66, or directly via a communication link such as a wired or wireless connection. The computing device 65 may be configured to carry out processes such as generating executable instruction for building a component with the manufacturing apparatus 10, such as by implementing CAD or other related three-dimensional drafting and rendering systems as well as a slicing engine or the like.

Moreover, in some embodiments, the computing device 65 may be communicatively coupled to the print head 104 via the communication conduit 64. As such, the computing device 65 may be configured to control the operation of print head 104 such that one or more laser beams 106 is generated, focused, and scanned across the build plane 54. The computing device 65 also receives data associated with the location(s) of the beam(s) 106 relative to the build platform 14 from the print head 104 as the beam(s) 106 are scanned across the build plane 54.

The configuration of the manufacturing apparatus 10 described above and shown in FIG. 1 is provided only to place the present subject matter in an exemplary field of use. Thus, the present subject matter may be readily adaptable to any manner of additive manufacturing machine, including additive manufacturing machines that use different additive manufacturing techniques.

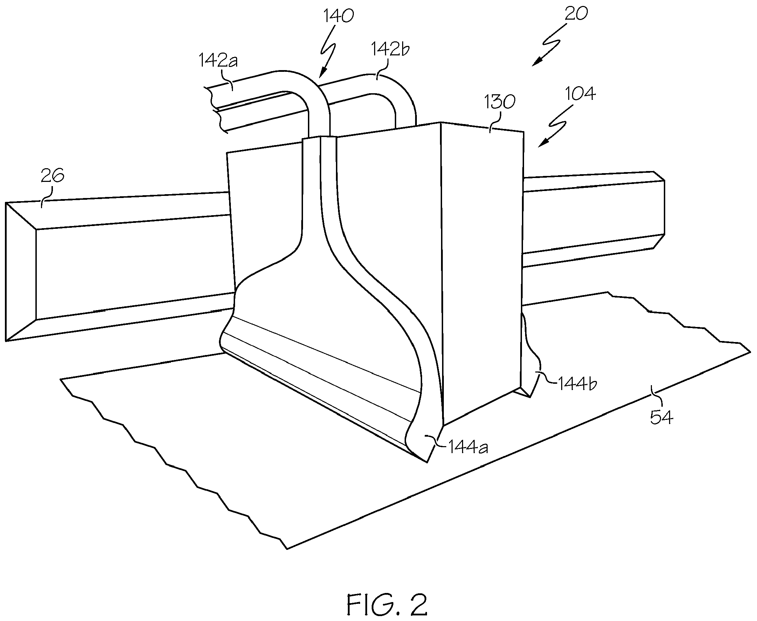

FIG. 2 is a perspective view of a portion of a printing assembly 20 in accordance with one embodiment of the disclosure. The printing assembly 20 is coupled to the rail 26 of the manufacturing apparatus 10 in the manner described above. The portion of the printing assembly 20 shown here is the print head 104. The print head 104 includes a housing 130 that protects the one or more components configured to collimate, focus, and direct the emitted laser beam 106. Moreover, a soot collection system 140 is mounted on the exterior of the housing 130 and includes one or more soot collection tubes 142a, 142b connected to one or more soot collection heads 144a, 144b, respectively. The soot collection heads 144a, 144b are disposed on both sides of the print head 104 and are positioned adjacent to the build plane 54 to collect soot generated during the melting/fusing of powder. The soot collection heads 144a, 144b also contain geometric features to provide laminar flow of process gas across the build plane 54 at a rate to remove soot but leave the surface of build plane 54 undisturbed. The soot collection tubes 142a, 142b subsequently transfer the soot away from the build plane 54 to an appropriate filter or collection receptacle (not shown). In some embodiments, the computing device 65 may be communicatively coupled to the print head 104. As such, the computing device 65 may be configured to control the operation of the print head 104 such that the soot collection system 140 can function as described herein.

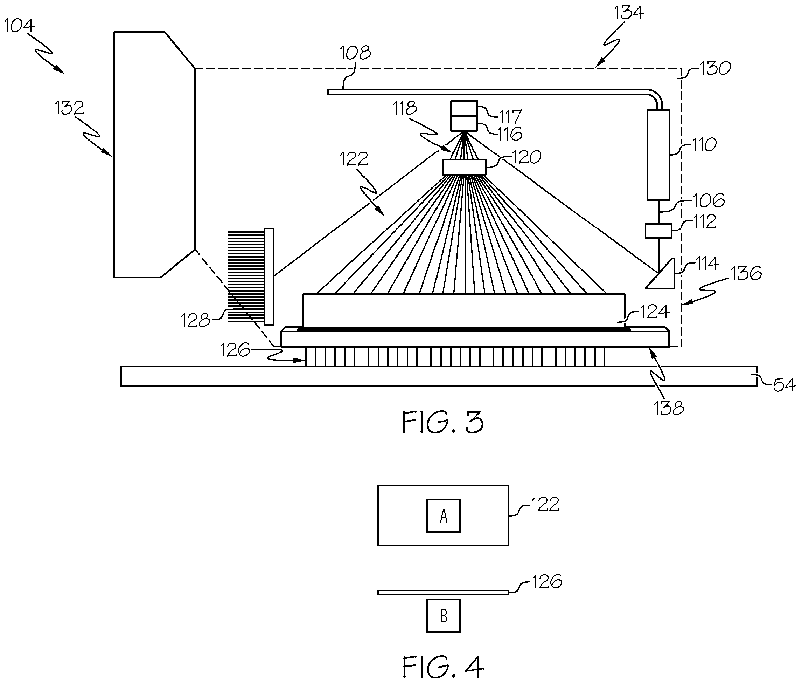

FIG. 3 is a cross-sectional side view of one embodiment of a print head 104 in accordance with the disclosure, wherein the print head 104 is self-contained and generally includes optical components configured to collimate and focus the emitted laser beam 106 onto the build plane 54. In particular, the print head 104 includes one or more beam emitters 108 optically coupled to a collimator 110, which is optically coupled to a beam homogenizer 112, which is optically coupled to a turning optic 114, which is optically coupled to a projection element 116 (e.g., a special light modulator ("SLM")), which is optically coupled to imaging optics 120, which is optically coupled to a consolidating optic 124. In some embodiments, the beam emitter 108 is a fiber-coupled laser diode. Additional components within the self-contained print head 104 include an energy recovery device 128 which is optically coupled with the projection element 116. Each of the beam emitter 108, collimator 110, beam homogenizer 112, turning optic 114, projection element 116, imaging optics 120, consolidating optic 124, and energy recovery device 128 are at least partially mounted within the housing 130 using appropriate brackets and/or fasteners (not shown). The housing 130 has a front side 132, a top side 134, a back side 136, and a bottom side 138.

The beam emitter 108 generally extends along the top side 134 of the housing 130 and is configured to generate a laser beam(s) 106 of sufficient energy to at least partially melt the powder at the build plane 54. In some embodiments, the beam emitter 108 is disposed within the housing 130. In other embodiments, the beam emitter is a laser source (not shown) disposed outside of the housing 130 and coupled to a delivery medium (e.g., a fiber) which delivers the one or more laser beams to the housing. In some embodiments, the beam emitter 108 may include any suitable type of laser that enables manufacturing apparatus 10 to function as described herein, such as a fiber laser or fiber-delivered laser, a direct diode or fiber delivered direct diode, a Raman fiber laser, and in some embodiments a yttrium-based solid state laser or a CO₂ laser. Further, although print head 104 is shown and described as including a single beam emitter 108, print head 104 may include more than one beam emitter. In one embodiment, for example, print head 104 may include a first beam emitter having a first power or wavelength and a second beam emitter having a second power or wavelength different from the first laser power or wavelength, or at least two beam emitters having substantially the same power output and wavelength. In yet other embodiments, the print head 104 may include any combination of beam emitters that enable manufacturing apparatus 10 to function as described herein. In some embodiments, the computing device 65 may be communicatively coupled to the print head 104. As such, the computing device 65 may be configured to control the operation of the beam emitter 108 such that the print head 104 can function as described herein.

During operation of the print head 104, the beam emitter 108 first delivers the laser beam 106 to the collimator 110 which is disposed at a distal end of the beam emitter 108 and is located adjacent to the back side 136 of the housing 130. The collimator 110 is configured to convert the high divergence laser beam output by the fiber-coupled beam emitter 108 into a well collimated, parallel, low divergence beam using a lens system (not shown) which is matched to the fiber-coupled beam emitter 108.

After collimation by the collimator 110, the laser beam 106 has a round Gaussian or near-Gaussian energy distribution or profile and is delivered to the beam homogenizer 112. The beam homogenizer is generally disposed below the collimator 110 and is also located adjacent to the back side 136 of the housing 130. The beam homogenizer 112 converts the round Gaussian profile of the collimated laser beam 106 to have an even energy distribution which matches the projection element 116. In other words, after homogenization by the beam homogenizer 112, the laser beam 106 has a uniform energy distribution.

After homogenization by the beam homogenizer 112, the laser beam 106 having a uniform energy distribution is directed to the turning optic 114. The turning optic 114 is generally disposed below the beam homogenizer 112 and is located adjacent to the back side 136 of the housing 130. In some embodiments, the turning optic 114 is a dielectric mirror or prism. The turning optic 114 redirects the laser beam 106 having a uniform energy distribution to the projection element 116.

Once the laser beam 106 having a uniform energy distribution reaches the projection element 116, the projection element 116 projects a plurality of laser beams 118 having a pattern of laser light which forms an image or a line. The projection element 116 is generally disposed adjacent to the top side 134 of the housing 130 between the front and back sides 132, 134 thereof. Moreover, the projection element 116 is located above the turning optic 114. The projection element 116 is coupled to a cooling element 117 for cooling the projection element 116 from heat generated by the energy of laser beam 106. In some embodiments, the projection element 116 is a digital micromirror device ("DMD"). In other embodiments, the projection element 116 is a liquid crystal display ("LCD") projector, liquid crystal on silicon ("LCOS") projector, or other SLM. In some embodiments, the computing device 65 may be communicatively coupled to the print head 104. As such, the computing device 65 may be configured to control the operation of the print head 104 such that the projection element 116 can function as described herein. In particular, the computing device 65 may be configured to control the pattern of the plurality of laser beams projected by the projection element 116.

Moreover, once the laser beam 106 having a uniform energy distribution reaches the projection element 116, the projection element 116 directs a portion of the laser beam 106 to an energy recovery device 128. The energy recovery device 128 is generally disposed adjacent to the front side 132 of the housing 130 and is located below the projection element 116. In some embodiments, the energy recovery device 128 is a heat sink or heat exchanger. The energy recovery device 128 is configured to recover any energy which is not used by the projection element 116. In some embodiments, the energy recovered by the energy recovery device 128 is used for pre- or post-heating of the powder 48. In other embodiments, the energy recovery device 128 includes a photovoltaic cell (not shown) for generating electric power from the energy recovered by the energy recovery device 128 and which can be reused within the manufacturing apparatus 10. In further embodiments, the energy recovery device 128 is a beam dump which removes the energy recovered by the energy recovery device 128 from the manufacturing apparatus 10.

Next, the plurality of laser beams 118 generated by the projection element 116 are directed to the imaging optic(s) 120 disposed below the projection element 116. The imaging optic(s) 120 is made up of transmissive or reflective elements which change the magnification of the pattern formed by the plurality of laser beams 118 into a magnified pattern of laser beams 122. For example, with reference to FIG. 4, a top view of the magnified pattern of laser beams 122 is shown to form an image having a rectangular image plane "A". However, it should be understood that the magnified pattern of laser beams 122 may form any image having an image plane of multiple different shapes or sizes as desired.

The imaging optic(s) 120 delivers the magnified pattern of laser beams 122 to the consolidating optic 124. The consolidating optic 124 is disposed below the imaging optic(s) 120 and is located adjacent to the bottom side 138 of the housing 130. In some embodiments, the consolidating optic 124 is a cylindrical lens or focusing diffractive optic. The consolidating optic 124 is used to consolidate the magnified pattern of laser beams 122 into a consolidated pattern of laser beams 126 at the build plane 54. For example, with reference to FIG. 4, a top view of the consolidated pattern of laser beams 126 is shown to form an image having a linear image plane "B". However, it should be understood that the consolidated pattern of laser beams 126 may form any image having an image plane of multiple different shapes or sizes as desired. The print head 104 thus scans the consolidated pattern of laser beams 126 over the portion of the build plane 54 at which it desired to melt or fuse the powder to form a layer(s) of the workpiece.

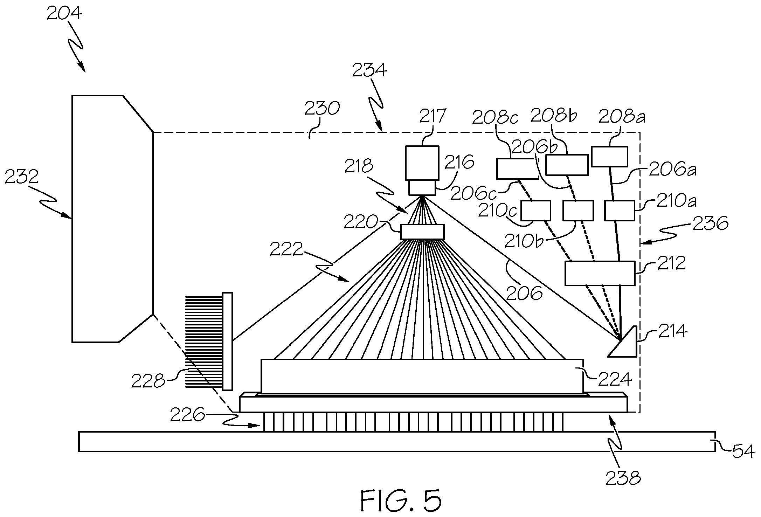

FIG. 5 is a cross-sectional side view of another embodiment of a print head 204 in accordance with the disclosure, wherein the print head 204 is self-contained and generally includes optical components configured to collimate and focus one or more emitted beam (s) 206a-206c onto the build plane 54. It should be understood that the print head 204 can be used in conjunction with the manufacturing apparatus 10 in a substantially similar manner as print head 104 discussed above.

In particular, print head 204 includes a plurality of beam emitters 208a-208c optically coupled to a plurality of collimators 210a, 210b, 210c, which is optically coupled to a beam homogenizer 212, which is optically coupled to a turning optic 214, which is optically coupled to a projection element 216 (e.g., an SLM), which is optically coupled to imaging optics 220, which is optically coupled to a consolidating optic 224. In some embodiments, the beam homogenizer 212 is a single homogenizer configured to homogenize each laser beam 206a-206c similarly. In other embodiments, the beam homogenizer 212 includes a plurality of beam homogenizers 212, where each beam homogenizer 212 is configured to separately homogenize a respective one of the laser beams 206a-206c. Additional components within the self-contained print head 204 include an energy recovery device 228 which is optically coupled with the projection element 216. Each of the plurality of beam emitters 208a-208c, plurality of collimators 210a-210c, beam homogenizer 212, turning optic 214, projection element 216, imaging optics 220, consolidating optic 224, and energy recovery device 228 are at least partially mounted within the housing 230 using appropriate brackets and/or fasteners (not shown). The housing 230 has a front side 232, a top side 234, a back side 236, and a bottom side 238.

The plurality of beam emitters 208a-208c are configured to generate laser beams 206a-206c, respectively, of sufficient energy to at least partially melt the powder at the build plane 54. The plurality of beam emitters are generally disposed along the top side 234 of the housing 230 and are located adjacent to the back side 236 thereof. As in print head 104 described above, in some embodiments, the beam emitters 208-208c may include any suitable type of laser that enables manufacturing apparatus 10 to function as described herein, such as a fiber laser or fiber-delivered laser, a direct diode or a fiber delivered direct diode, a Raman fiber laser, and in some embodiments a yttrium-based solid state laser or a CO₂ laser. As illustrated in FIG. 5, in some embodiments the plurality of beam emitters 208a-208c may include a first beam emitter 208a having a first power or wavelength, a second beam emitter 208b having a second power or wavelength different from the first laser power or wavelength, and a third beam emitter 208c having a third power or wavelength different from the first and second laser powers or wavelengths.

During operation of the print head 204, the plurality of beam emitters 208a-208c first deliver the laser beams 206a-206c, respectively, to the plurality of collimators 210a-210c. The plurality of collimators 210a-210c is generally disposed under the plurality of beam emitters 208a-208c and is located adjacent to the back side 236 of the housing 230. The plurality of collimators 210a-210c is configured to convert each high divergence laser beam 206a-206c output by the beam emitters 208-208c into well collimated, parallel, low divergence beams using a lens system (not shown).

After collimation by the plurality of collimators 210a-210c, the laser beams 206a-206c have a round Gaussian or near-Gaussian energy distribution or profile and are delivered to the beam homogenizer 212. The beam homogenizer 212 is generally disposed below the plurality of collimators 210a-210c and is located adjacent to the back side 236 of the housing 230. The beam homogenizer 212 converts each round Gaussian profile of the collimated beams 206a-206c to have an even energy distribution which matches the projection element 216. Moreover, the beam homogenizer 212 combines each laser beam 206a-206c into a single laser beam 206.

After homogenization by the beam homogenizer 212, a single laser beam 206 having a uniform energy distribution is delivered to the turning optic 214. The turning optic 214 is generally disposed below the beam homogenizer 212 and is located adjacent to the back side 236 of the housing 230. In some embodiments, the turning optic 214 is a dielectric mirror or prism. The turning optic 214 redirects the laser beam 206 having a uniform energy distribution to the projection element 216.

Once the laser beam 206 having a uniform energy distribution reaches the projection element 216, the projection element 216 projects a plurality of laser beams 218 having a pattern of laser light which forms an image or a line. The projection element 216 is generally disposed adjacent to the top side 234 of the housing 230 between the front and back sides 232, 234 thereof. In some embodiments, the projection element 216 is an SLM. The projection element 116 is coupled to a cooling element 217 for cooling the projection element 216 from heat generated by the energy of laser beam 206.

Moreover, once the laser beam 206 having a uniform energy distribution reaches the projection element 216, the projection element 216 directs a portion of the laser beam 206 to an energy recovery device 228. The energy recovery device 228 is generally disposed adjacent to the front side 232 of the housing 230 and is located below the projection element 216. In some embodiments, the energy recovery device 228 is a heat sink or heat exchanger. The energy recovery device 228 is configured to recover energy that is not used by the projection element 216. In some embodiments, the energy recovered by the energy recovery device 228 is used for pre- or post-heating of the powder 48. In other embodiments, the energy recovery device 228 includes a photovoltaic cell (not shown) for generating electric power from the energy recovered by the energy recovery device 228 and which can be reused within the manufacturing apparatus 10. In further embodiments, the energy recovery device 228 is a beam dump which removes the energy recovered by the energy recovery device 228 from the manufacturing apparatus 10.

Next, the plurality of laser beams 218 generated by the projection element 216 are directed to the imaging optic(s) 220 disposed below the projection element 216. The imaging optic(s) 220 is made up of transmissive or reflective elements which change the magnification of the pattern formed by the plurality of laser beams 218 into a magnified pattern of laser beams 222. For example, the magnified pattern of laser beams 222 may form an image similar to the magnified pattern of laser beams 122 discussed above with respect to print head 104 (FIG. 3).

The imaging optic(s) 220 delivers the magnified pattern of laser beams 222 to the consolidating optic 224. The consolidating optic 224 is generally disposed below the imaging optic(s) 220 and is located adjacent to the bottom side 238 of the housing 230. In some embodiments, the consolidating optic 224 is a cylindrical lens or focusing diffractive optic. The consolidating optic 224 is used to consolidate the magnified pattern of laser beams 222 into a consolidated pattern of laser beams 226 at the build plane 54. For example, the consolidated pattern of laser beams 226 may form an image similar to the consolidated pattern of laser beams 126 discussed above with respect to print head 104 (FIG. 3). The print head 204 thus scans the consolidated pattern of laser beams 226 over the portion of the build plane 54 at which it desired to melt or fuse the powder to form a layer(s) of the workpiece.

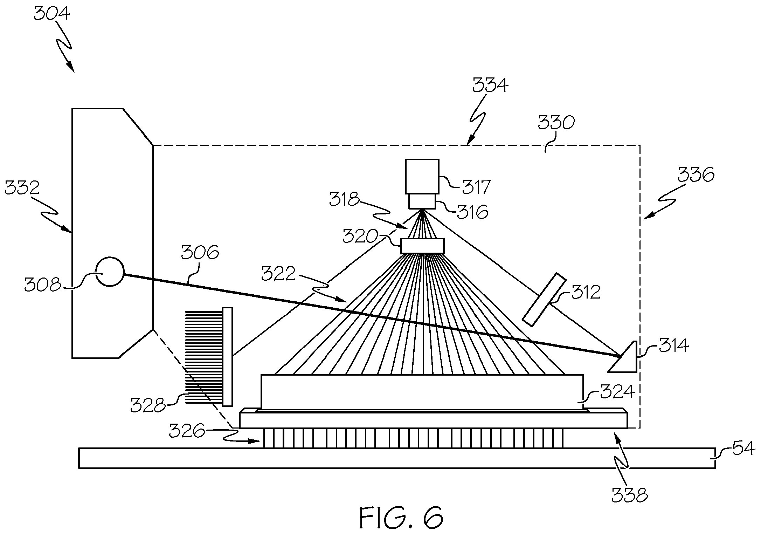

FIG. 6 is a cross-sectional side view of yet another embodiment of a print head 304 in accordance with the disclosure, wherein the print head 304 is self-contained and generally includes optical components configured to collimate and focus the emitted laser beam 306 onto the build plane 54 of the powder. It should be understood that the print head 304 can be used in conjunction with the manufacturing apparatus 10 in a substantially similar manner as print head 104 discussed above.

In particular, the print head 304 includes one or more beam emitters 308 optically coupled to a turning optic 314, which is optically coupled to a beam homogenizer 312, which is optically coupled to a projection element 316 (e.g., an SLM), which is optically coupled to imaging optics 320, which is optically coupled to a consolidating optic 324.

In some embodiments, the beam emitter 308 generates a free space laser beam 306 where the transmission medium is air ("free space") rather than glass (e.g., the glass in a fiber optic cable). In such embodiments, the beam emitter 308 is generally disposed outside of housing 330. Additional components within the self-contained print head 304 include an energy recovery device 328 which is optically coupled with the projection element 316. Each of the beam homogenizer 312, turning optic 314, projection element 316, imaging optics 320, consolidating optic 324, and energy recovery device 328 are at least partially mounted within the housing 330 using appropriate brackets and/or fasteners (not shown). The housing 330 has a front side 332, a top side 334, a back side 336, and a bottom side 338.

The beam emitter 308 is configured to generate a collimated laser beam 306 of sufficient energy to at least partially melt the powder at the build plane 54. The beam emitter 308 is generally disposed adjacent to the front side 332 of the housing 330. In some embodiments, the beam emitter 308 may include any suitable type of laser that enables manufacturing apparatus 10 to function as described herein, such as a fiber laser or fiber-delivered laser, a direct diode or a fiber delivered direct diode, a Raman fiber laser, and in some embodiments a yttrium-based solid state laser or a CO₂ laser. Further, although print head 304 is shown and described as including a single beam emitter 308, print head 304 may include more than one beam emitter. In one embodiment, for example, print head 304 may include a first beam emitter having a first power or wavelength and a second beam emitter having a second power or wavelength different from the first laser power or wavelength, or at least two beam emitters having substantially the same power output and wavelength. In yet other embodiments, the print head 304 may include any combination of beam emitters that enable manufacturing apparatus 10 to function as described herein.

During operation of the print head 304, the beam emitter 308 transmits a free space laser beam 306 which is collimated (e.g., parallel rays with low divergence) using a lens system (not shown). The free space laser beam 306 has a round Gaussian or near-Gaussian energy distribution or profile and is delivered to the turning optic 314 which is generally disposed adjacent to the back side 336 of the housing 330 and located below the beam emitter 308. In some embodiments, the turning optic 314 is a dielectric mirror or prism. The turning optic 314 redirects the free space laser beam 306 having a round Gaussian or near-Gaussian energy distribution to the beam homogenizer 312.

The beam homogenizer 312 is generally disposed above and away (e.g., toward the front side 332 of the housing 330) from the turning optic 314. The beam homogenizer 312 converts the round Gaussian or near-Gaussian profile of the free space laser beam 306 to have an even energy distribution which matches the projection element 316. In other words, after homogenization by the beam homogenizer 312, the free space laser beam 306 has a uniform energy distribution.

After homogenization by the beam homogenizer 312, the free space laser beam 306 having a uniform energy distribution is directed to the projection element 316. The projection element 316 is generally disposed adjacent to the top side 334 of the housing 330 between the front and back sides 332, 334 thereof and is located above the beam homogenizer 312. Once the free space laser beam 306 having a uniform energy distribution reaches the projection element 316, the projection element 316 projects a plurality of laser beams 318 having a pattern of laser light which forms an image or a line. In some embodiments, the projection element 316 is an SLM. The projection element 316 is coupled to a cooling element 317 for cooling the projection element 316 from heat generated by the energy of laser beam 306.

Moreover, once the free space laser beam 306 having a uniform energy distribution reaches the projection element 316, the projection element 316 directs a portion of the laser beam 306 to an energy recovery device 328. The energy recovery device 328 is generally disposed adjacent to the front side 332 of the housing 330 and is located below the projection element 316. In some embodiments, the energy recovery device 328 is a heat sink or heat exchanger. The energy recovery device 328 is configured to recover any energy which is not used by the projection element 316. In some embodiments, the energy recovered by the energy recovery device 328 is used for pre- or post-heating of the powder 48. In other embodiments, the energy recovery device 328 includes a photovoltaic cell (not shown) for generating electric power from the energy recovered by the energy recovery device 328 and which can be reused within the manufacturing apparatus 10. In further embodiments, the energy recovery device 328 is a beam dump which removes the energy recovered by the energy recovery device 328 from the manufacturing apparatus 10.

Next, the plurality of laser beams 318 generated by the projection element 316 are directed to the imaging optic(s) 320 disposed below the projection element 316. The imaging optic(s) 320 is made up of transmissive or reflective elements which change the magnification of the pattern formed by the plurality of laser beams 318 into a magnified pattern of laser beams 322. For example, the magnified pattern of laser beams 322 may form an image similar to the magnified pattern of laser beams 122 discussed above with respect to print head 104 (FIG. 3).

The imaging optic(s) 320 delivers the magnified pattern of laser beams 322 to the consolidating optic 324. The consolidating optic 324 is generally disposed below the imaging optic(s) 320 and is located adjacent to the bottom side 338 of the housing 330. In some embodiments, the consolidating optic 324 is a cylindrical lens or focusing diffractive optic. The consolidating optic 324 is used to consolidate the magnified pattern of laser beams 322 into a consolidated pattern of laser beams 326 at the build plane 54. For example, the consolidated pattern of laser beams 326 may form an image similar to the consolidated pattern of laser beams 126 discussed above with respect to print head 104 (FIG. 3). The print head 304 thus scans the consolidated pattern of laser beams 326 over the portion of the build plane 54 at which it desired to melt or fuse the powder to form a layer(s) of the workpiece.

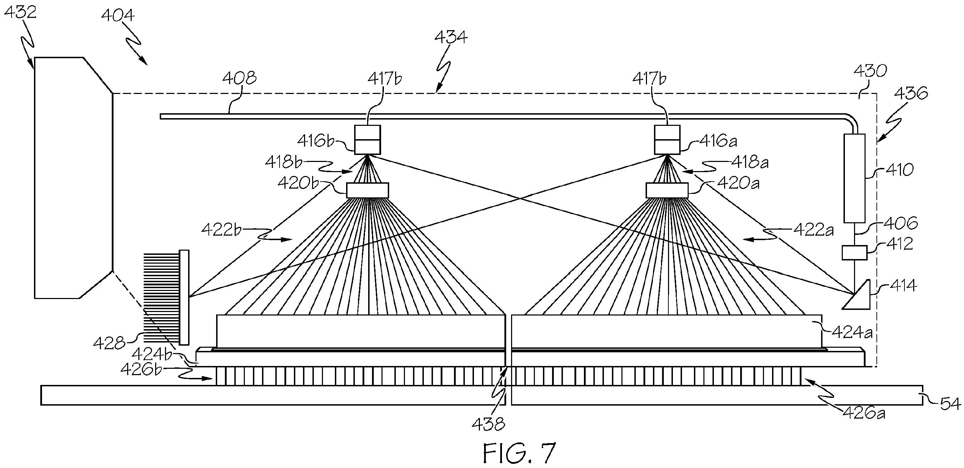

FIG. 7 is a cross-sectional side view of another embodiment of a print head 404 in accordance with the disclosure, wherein the print head 404 is self-contained and generally includes optical components configured to collimate and focus the emitted laser beam 406 onto the build plane 54 of the powder. Print head 404 is expanded from print head 104 discussed above and includes two or more projection elements 416a, 416b placed adjacent to each other in order to increase the total print area at the build plane 54. It should be understood that the print head 404 can be used in conjunction with the manufacturing apparatus 10 in a substantially similar manner as print head 104 discussed above.

In particular, the print head 404 includes one or more beam emitters 408 optically coupled to a collimator 410, which is optically coupled to a beam homogenizer 412, which is optically coupled to a turning optic 414, which is optically coupled to a first projection element 416a (e.g., an SLM), which is optically coupled to first imaging optics 420a, which is optically coupled to a first consolidating optic 424a. Moreover, the turning optic 414 is also optically coupled with a second projection element 416b, which is optically coupled to second imaging optics 420b, which is optically coupled to a second consolidating optic 424b. The first and second projection elements 416a, 416b are each configured to redirect a portion of the laser beam 406 to an energy recovery device 428.

Each of the beam emitter 408, collimator 410, beam homogenizer 412, turning optic 414, first and second projection elements 416a, 416b, first and second imaging optics 420a, 420b, first and second consolidating optics 424a, 424b, and energy recovery device 428 are at least partially mounted within the housing 430 using appropriate brackets and/or fasteners (not shown).The housing 430 has a front side 432, a top side 434, a back side 436, and a bottom side 438.

The beam emitter 408 generally extends along the top side 434 of the housing 430 and is configured to generate a laser beam(s) 406 of sufficient energy to at least partially melt the powder at the build plane 54. In some embodiments, the beam emitter 408 may include any suitable type of laser that enables manufacturing apparatus 10 to function as described herein, such as a fiber laser or fiber-delivered laser, a direct diode or a fiber delivered direct diode, a Raman fiber laser, and in some embodiments a yttrium-based solid state laser or a CO₂ laser. Further, although print head 404 is shown and described as including a single beam emitter 408, print head 404 may include more than one beam emitter. In one embodiment, for example, print head 404 may include a first beam emitter having a first power or wavelength and a second beam emitter having a second power or wavelength different from the first laser power or wavelength, or at least two beam emitters having substantially the same power output and wavelength. In yet other embodiments, the print head 404 may include any combination of beam emitters that enable manufacturing apparatus 10 to function as described herein.

During operation of the print head 404, the beam emitter 408, the collimator 410, the beam homogenizer 412, the turning optic 414, and the first projection element 416a are configured and operate in a substantially similar manner as the corresponding components of print head 104 discussed above. The operation of the turning optic 414 of print head 404 differs from the operation of turning optic 114 of print head 104 in that the turning optic 414 also directs a portion of the laser beam 406 to the second projection element 416b. The second projection element 416b is configured to then direct the portion of the laser beam 406 to the energy recovery device 428. In turn, the energy recovery device 428 is configured and operates in a substantially similar manner as the energy recovery device 128 of print head 104, except the energy recovery device 428 is further configured to receive the portion of the laser beam 406 from the second projection element 416b.

The first and second projection elements 416a, 416b are generally disposed adjacent to the top side 434 of the housing 430 with the first projection element 416a being located toward the back side 436 of the housing 130 and the second projection element 416b being spaced apart (i.e., located toward the front side 432 of the housing 130) from the first projection element 416a. Moreover, the first and second projection elements 416a, 416b are located above the turning optic 414. In some embodiments, the first and second projection elements 416a, 416b are SLMs. The first and second projection elements 416a, 416b are also coupled to a corresponding cooling element 417a, 417b, respectively, for cooling the first and second projection elements 416a, 416b from heat generated by the energy of laser beam 406.

Once the laser beam 406 reaches the first and second projection elements 416a, 416b, each of the first and second projection elements 416a, 416b project a plurality of laser beams 418a, 418b, respectively, having a pattern of laser light which forms an image or a line. Next, the plurality of laser beams 418a, 418b generated by the first and second projection elements 416a, 416b are directed to the imaging optics 420a, 420b disposed below the first and second projection elements 416a, 416b, respectively. The imaging optics 420a, 420b are configured and operate in a substantially similar manner as the imaging optic 120 of print head 104 discussed above. Thus, the imaging optics 420a, 420b each generate a magnified pattern of laser beams 422a, 422b, respectively. For example, each magnified pattern of laser beams 422a, 422b may form an image similar to the magnified pattern of laser beams 122 discussed above with respect to print head 104 (FIG. 3).

The imaging optics 420a, 420b subsequently delivers the magnified patterns of laser beams 422a, 422b to the corresponding consolidating optics 424a, 424b. The consolidating optics 424a, 424b are configured and operate in a substantially similar manner as the consolidating optic 124 of print head 104 discussed above. Thus, the consolidating optics 424a, 424b each generate a respective consolidated pattern of laser beams 426a, 426b. For example, each consolidated pattern of laser beams 426a, 426b may form an image similar to the consolidated pattern of laser beams 126 discussed above with respect to print head 104 (FIG. 3). The print head 404 thus scans the consolidated patterns of laser beams 426a, 426b over the portion of the build plane 54 at which it desired to melt or fuse the powder to form a layer(s) of the workpiece. In this regard, the expanded print head 404 increases the total print area at the build plane 54 compared to the total print area of the individual print head 104 discussed above.

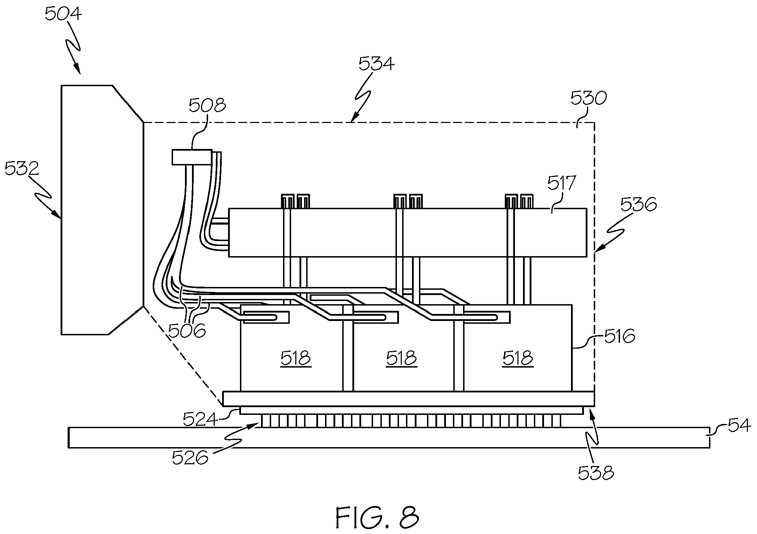

FIG. 8 is a cross-sectional side view of yet another embodiment of a print head 504 in accordance with the disclosure, wherein the print head 504 is self-contained and generally includes optical components configured to collimate and focus the emitted beam(s) onto the build plane 54 of the powder. It should be understood that the print head 504 can be used in conjunction with the manufacturing apparatus 10 in a substantially similar manner as print head 104 discussed above.

In particular, the print head 504 includes one or more beam emitters 508 which supply laser beams via one or more control lines 506 (e.g., fibers). In some embodiments, one or more beam emitters 508 may include any suitable type of laser that enables manufacturing apparatus 10 to function as described herein, such as a fiber laser or fiber-delivered laser, a direct diode or fiber delivered direct diode, a Raman fiber laser, and in some embodiments a yttrium-based solid state laser or a CO₂ laser. The one or more control lines 506 each direct a laser beam to a projection element 516 (e.g., a laser diode array). The projection element or laser diode array 516 is made up of a plurality of print heads 518, where each print head 518 is optically coupled with one of the one or more control lines 506 to receive a laser beam therefrom. In other embodiments, the one or more beam emitters 508 is a power source which supplies power via the one or more control lines 506. The one or more control lines 506 each direct power to the plurality of print heads 518 of laser diode array 516.

Additional components included within the print head 504 include a heat exchanger or heat sink 517 mounted on top of the laser diode array 516 and a consolidating optic 524 disposed below the laser diode array 516. Each of the one or more beam emitters 508, one or more control lines 506, the laser diode array 516, the heat sink 517, and the consolidating optic 524 are at least partially mounted within a housing 530. The housing 530 has a front side 532, a top side 534, a back side 536, and a bottom side 538.

In the laser diode array 516 illustrated in FIG. 8, only three print heads 518 can be seen. However, it is noted that the laser diode array 516 includes an additional three print heads 518 and which are obscured from view. In this regard, the following discussion describes the configuration and operation of the laser diode array with respect to the three visible print heads 518. However, it should be understood that the three print heads 518 which are obscured from view operate in a substantially similar manner. The laser diode array 516 is generally disposed between the front and back sides 532, 536 of the housing 530 and is located adjacent to the bottom side 538 of the housing 530.

The beam emitter 508 is generally disposed adjacent the front side 532 of the housing 530 and is configured to generate a laser beam(s) (not shown) of sufficient energy to at least partially melt the powder at the build plane 54. Although print head 504 is shown and described as including a single beam emitter 508, print head 504 may include more than one beam emitter. In one embodiment, for example, print head 504 may include a first beam emitter having a first power or wavelength and a second beam emitter having a second power or wavelength different from the first laser power or wavelength, or at least two beam emitters having substantially the same power output and wavelength. In yet other embodiments, the print head 504 may include any combination of beam emitters that enable manufacturing apparatus 10 to function as described herein.

During operation of the print head 504, the beam emitter 508 first delivers a laser beam through each of the one or more control lines 506 to the laser diode array 516, such that each print head 518 is optically coupled with one of the one or more control lines 506. In other embodiments, the beam emitter 508 is a power supply which first delivers power through each of the one or more control lines 506 to the laser diode array 516, such that each print head 518 is electrically powered. Once the one or more control lines 506 deliver the laser beam (or power) to each print head 518 of the laser diode array 516, each print head 518 projects a plurality of laser beams (not shown) having a pattern of laser light which forms an image or a line. Moreover, the laser diode array 516 directs a portion of the laser beam to the heat sink 517. The heat sink 517 is configured to recover any energy which is not used by the laser diode array 516. In addition, the heat sink 517 acts as a cooling element for cooling the laser diode array 516 from heat generated by the energy of the laser beams (or power) delivered through the one or more control lines 506.

Each print head 518 subsequently delivers the plurality of laser beams (not shown) having a pattern of laser light which forms an image or a line to the consolidating optic 524. The consolidating optic 524 is disposed below laser diode array 516 and is located adjacent to the bottom side 538 of the housing 530. In some embodiments, the consolidating optic 524 is a cylindrical lens or focusing diffractive optic. The consolidating optic 524 is used to consolidate the plurality of laser beams (not shown) generated by each of the print heads 518 and having a pattern of laser light which forms an image or a line into a consolidated pattern of laser beams 526 at the build plane 54. For example, each consolidated pattern of laser beams 526 may form an image similar to the consolidated pattern of laser beams 126 discussed above with respect to print head 104 (FIG. 3). The print head 504 thus scans the consolidated pattern of laser beams 526 over the portion of the build plane 54 at which it desired to melt or fuse the powder to form a layer(s) of the workpiece.

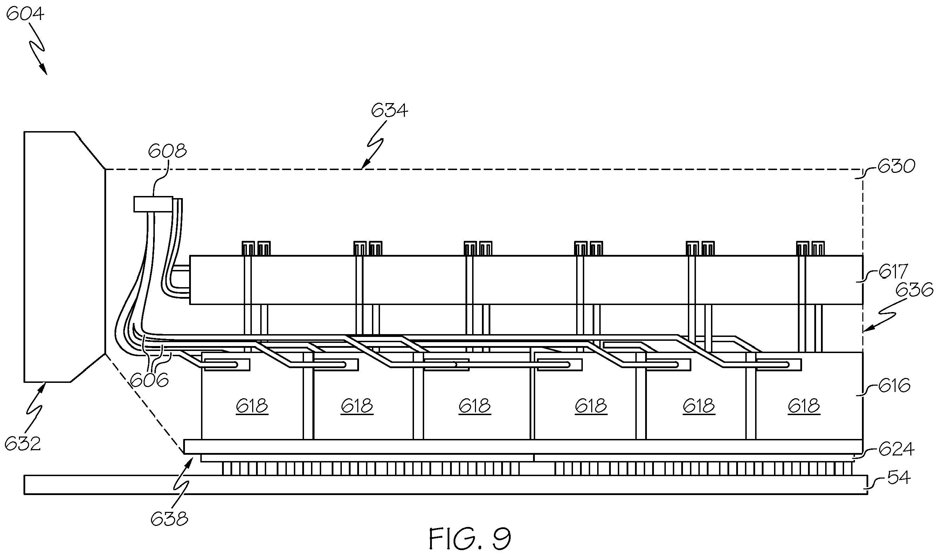

FIG. 9 is a cross-sectional side view of yet another embodiment of a print head 604 in accordance with the disclosure, wherein the print head 604 is self-contained and generally includes optical components configured to collimate and focus an emitted beam(s) (not shown) onto the build plane 54 of the powder. Print head 604 is expanded from print head 504 discussed above and includes a larger projection element or laser diode array 516 in order to increase the total print area at the build plane 54. It should be understood that the print head 604 can be used in conjunction with the manufacturing apparatus 10 in a substantially similar manner as print head 104 discussed above.

In particular, the print head 604 includes one or more beam emitters 608 which supply laser beams via one or more control lines 606 (e.g., fibers). In some embodiments, one or more beam emitters 608 may include any suitable type of laser that enables manufacturing apparatus 10 to function as described herein, such as a fiber laser or fiber-delivered laser, a direct diode or fiber delivered direct diode, a Raman fiber laser, and in some embodiments a yttrium-based solid state laser or a CO₂ laser. The one or more control lines 606 each direct a laser beam to a projection element 616 (e.g., a laser diode array). The projection element or laser diode array 616 is made up of a plurality of print heads 618, where each print head 618 is optically coupled with one of the one or more control lines 606 to receive a laser beam therefrom. In other embodiments, the one or more beam emitters 608 is a power source which supplies power via the one or more control lines 606. The one or more control lines 606 each direct power to the plurality of print heads 618 of laser diode array 616.

Additional components included within the print head 604 include a heat exchanger or heat sink 617 mounted on top of the laser diode array 616 and a consolidating optic 624 disposed below the laser diode array 616. Each of the one or more beam emitters 608, one or more control lines 606, the laser diode array 616, the heat sink 617, and consolidating optic 624 are at least partially mounted within a housing 630. The housing 630 has a front side 632, a top side 634, a back side 636, and a bottom side 638.

In the laser diode array 616 illustrated in FIG. 9, only six print heads of the plurality of print heads 618 can be seen. However, it is noted that the laser diode array 616 includes an additional six print heads which make up the plurality of print heads 618 and which are obscured from view. In this regard, the following discussion describes the configuration and operation of the laser diode array with respect to the six visible print heads of the plurality of print heads 618. However, it should be understood that the six print heads of the plurality of print heads 618 which are obscured from view operate in a substantially similar manner. The laser diode array 616 is generally disposed between the front and back sides 632, 636 of the housing 630 and is located adjacent to the bottom side 638 of the housing 630.

The beam emitter 608 is generally disposed adjacent the front side 632 of the housing 630 and is configured to generate a laser beam(s) (not shown) of sufficient energy to at least partially melt the powder at the build plane 54. Although print head 604 is shown and described as including a single beam emitter 608, print head 604 may include more than one beam emitter. In one embodiment, for example, print head 604 may include a first beam emitter having a first power or wavelength and a second beam emitter having a second power or wavelength different from the first laser power or wavelength, or at least two beam emitters having substantially the same power output and wavelength. In yet other embodiments, the print head 604 may include any combination of beam emitters that enable manufacturing apparatus 10 to function as described herein.

During operation of the print head 604, the beam emitter 608 first delivers a laser beam through each of the one or more control lines 606 to the laser diode array 616, such that each print head 618 is optically coupled with one of the one or more control lines 606. In other embodiments, the beam emitter 608 is a power supply which first delivers power through each of the one or more control lines 606 to the laser diode array 616, such that each print head 618 is electrically powered.

Once the one or more control lines 606 deliver the laser beam (or power) to each print head 618 of the laser diode array 616, each print head 618 projects a plurality of laser beams (not shown) having a pattern of laser light which forms an image or a line. Moreover, the laser diode array 616 directs a portion of the laser beam to the heat sink 617. The heat sink 617 is configured to recover any energy which is not used by the laser diode array 616. In addition, the heat sink 617 acts as a cooling element for cooling the laser diode array 616 from heat generated by the energy of the laser beams (or power) delivered through the one or more control lines 606.

Each print head 618 subsequently delivers the plurality of laser beams (not shown) having a pattern of laser light which forms an image or a line to the consolidating optic 624. The consolidating optic 624 is disposed below laser diode array 616 and is located adjacent to the bottom side 638 of the housing 630. In some embodiments, the consolidating optic 624 is a cylindrical lens or focusing diffractive optic. The consolidating optic 624 is used to consolidate the plurality of laser beams (not shown) generated by each of the print heads 618 and having a pattern of laser light which forms an image or a line into a consolidated pattern of laser beams 626 at the build plane 54. For example, each consolidated pattern of laser beams 626 may form an image similar to the consolidated pattern of laser beams 126 discussed above with respect to print head 104 (FIG. 3). The print head 604 thus scans the consolidated pattern of laser beams 626 over the portion of the build plane 54 at which it is desired to melt or fuse the powder to form a layer(s) of the workpiece. In this regard, the expanded print head 604 increases the total print area at the build plane 54 compared to the total print area of the individual print head 504 discussed above.

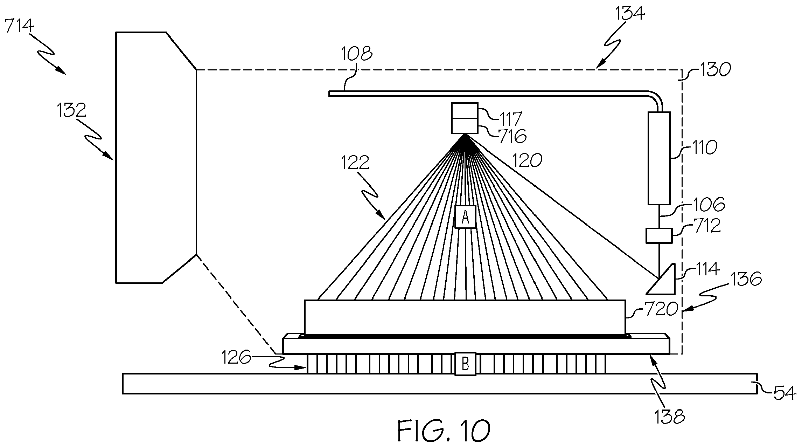

FIG. 10 is a cross-sectional side view of another embodiment of a print head 714 in accordance with the disclosure. The print head 714 is similar to the print head 104 depicted in FIG. 3. Accordingly, like numbers will be used to refer to like figures. It should be understood that the print head 714 can be used in conjunction with the manufacturing apparatus 10 in a substantially similar manner as print head 104 discussed above.

The print head 714 is self-contained and generally includes optical components configured to collimate and focus the emitted beam 106 onto the build plane 54. In particular, the print head 714 includes one or more beam emitters 108 optically coupled to a collimator 110, which is optically coupled to a beam homogenizer 712. The beam homogenizer 712 may include a delivery optic.

The beam homogenizer 712 is optically coupled to a turning optic 114, which is optically coupled to a projection element 716 (e.g., an SLM), which is optically coupled to an imaging optic 720. The print head 714 may not include a separate consolidating optic 124 as depicted, for example, in FIG. 3. Instead, the consolidation element may be integrated into the projection element 716. In some embodiments, the projection element 716 may be a LCOS device.

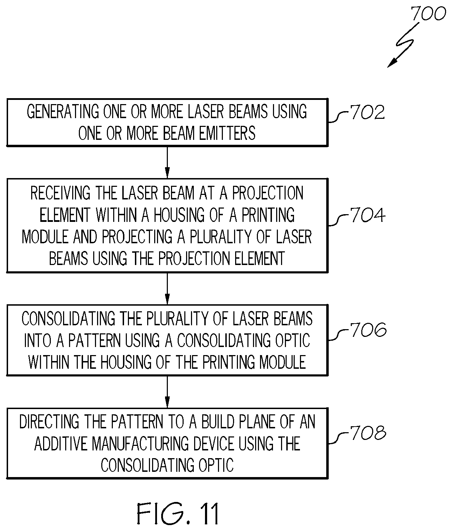

FIG. 11 is a flow diagram of a method 700 of delivering multiple laser beams to a build plane of an manufacturing apparatus 10, as depicted in FIGS. 1-3. Method 700 includes generating one or more laser beams 106 using one or more beam emitters 108 at step 702. Method 700 further includes receiving the laser beam 106 at a projection element 116 within a housing 130 of a print head 104 and projecting a plurality of laser beams 118 using the projection element 116 at step 704. Method 700 also includes consolidating the plurality of laser beams 118 into a consolidated pattern of laser beams 126 using a consolidating optic 124 within the housing 130 of the print head 104 at step 706. Method 400 additionally includes directing the consolidated pattern of laser beams 126 to a build plane 54 of the manufacturing apparatus 10 using the consolidating optic 124 at step 708.

From the above, it is to be appreciated that defined herein is a self-contained print head that includes one or more light sources of various powers and wavelengths. The print head utilizes multiple laser beams to fuse a powdered build material instead of a traditional single beam per scanner approach. This process produces less soot and greater energy efficiency in the additive manufacturing apparatus. Moreover, compared to traditional scanners, this process is less expensive, more robust, and can be calibrated prior to installation. In addition, the print head is modular such that a build area of the additive manufacturing apparatus can be increased by adding additional modules without the concern of soot and rejected heat. As such, the print head is scalable to increase consolidation rates of the powdered build material and to increase the size of parts which may be manufactured by the additive manufacturing apparatus. The beam shaping, combining, steering, and delivery optics for powder processing and pre- and post-heating of the weld zone are included within the print head.

Further aspects of the embodiments described herein are provided by the subject matter of the following clauses:
A print head for an additive manufacturing apparatus comprising: a housing; a projection element disposed within the housing, the projection element configured to receive one or more laser beams generated by a beam emitter and project a plurality of projected laser beams in a pattern; and a consolidating optic disposed within the housing and located below the projection element, the consolidating optic configured to consolidate the pattern of the plurality of projected laser beams into a consolidated pattern of projected laser beams.

The print head of any preceding clause, further comprising a collimator disposed at a distal end of the beam emitter and within the housing, a beam homogenizer disposed below the collimator and within the housing, and a turning optic disposed below the beam homogenizer and within the housing.

The print head of any preceding clause, further comprising one or more imaging optics disposed below the projection element.

The print head of any preceding clause, further comprising a heat sink disposed within the housing of the print head, wherein the projection element is further configured to direct a portion of the one or more laser beams to the heat sink disposed within the housing of the print head.

The print head of any preceding clause, further comprising a plurality of beam emitters configured to generate the one or more laser beams.

The print head of any preceding clause, wherein the one or more laser beams generated by the beam emitter is a free space laser beam.

The print head of any preceding clause, further comprising two or more projection elements disposed within the housing.

The print head of any preceding clause, wherein the consolidating optic is integrated into projection element.

An additive manufacturing apparatus comprising: a build platform supporting a powdered build material, the powdered build material defining a build plane on the build platform; and a print head including: a housing; a beam emitter configured to generate one or more laser beams; a projection element disposed within the housing, the projection element configured to receive the one or more laser beams and project a plurality of projected laser beams in a pattern; and a consolidating optic disposed within the housing and located below the projection element, the consolidating optic configured to consolidate the pattern of the plurality of projected laser beams into a consolidated pattern of projected laser beams; wherein the print head is configured to direct the consolidated pattern of projected laser beams over the build plane and melt a portion of the powdered build material at the build plane with the consolidated pattern of projected laser beams.

The additive manufacturing apparatus of any preceding clause, wherein the print head further includes a collimator disposed within the housing, wherein the collimator is optically coupled to the beam emitter.

The additive manufacturing apparatus of any preceding clause, wherein the print head further includes a beam homogenizer disposed within the housing, wherein the beam homogenizer is optically coupled to the collimator.

The additive manufacturing apparatus of any preceding clause, wherein the print head further includes a turning optic disposed within the housing, wherein the turning optic is optically coupled to the beam homogenizer and is configured to direct the one or more laser beams to the projection element.

The additive manufacturing apparatus of any preceding clause, wherein the print head further includes one or more imaging optics disposed within the housing, wherein the one or more imaging optics is optically coupled to the projection element.

The additive manufacturing apparatus of any preceding clause, wherein the projection element is a digital micromirror device.

The additive manufacturing apparatus of any preceding clause, further comprising a computing device configured to control the pattern of the plurality of projected laser beams projected by the projecting element.

The additive manufacturing apparatus of any preceding clause, further comprising a soot collection system mounted on the exterior of the housing of the print head.

A method of delivering a plurality of laser beams onto a build plane of an additive manufacturing apparatus, comprising: generating one or more laser beams with a beam emitter; receiving the one or more laser beams at a projection element disposed within a housing of a print head; projecting, by the projection element, a plurality of projected laser beams in a pattern; consolidating the pattern of the plurality of projected laser beams into a consolidated pattern of projected laser beams using a consolidating optic disposed within the housing; and directing the consolidated pattern of projected laser beams onto the build plane.

The method of any preceding clause, further comprising collimating the one or more laser beams to have a round Gaussian energy distribution, homogenizing the one or more laser beams to have a uniform energy distribution, and redirecting the one or more laser beams having the uniform energy distribution to the projection element.

The method of any preceding clause, further comprising magnifying the pattern of the plurality of projected laser beams projected by the projecting element and directing the magnified pattern to the consolidating optic.

The method of any preceding clause, further comprising directing a portion of the one or more laser beams to a heat sink using the projection element, wherein the heat sink is disposed within the housing of the print head.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A print head for an additive manufacturing apparatus comprising:
a housing;
a projection element disposed within the housing, the projection element configured to receive one or more laser beams from a beam emitter and project a plurality of projected laser beams in a pattern; and
a consolidating optic disposed within the housing and located below the projection element, the consolidating optic configured to consolidate the pattern of the plurality of projected laser beams into a consolidated pattern of projected laser beams.

2. The print head of claim 1, further comprising a collimator disposed at a distal end of the beam emitter and within the housing, a beam homogenizer disposed below the collimator and within the housing, and a turning optic disposed below the beam homogenizer and within the housing.

3. The print head of claim 1, further comprising one or more imaging optics disposed below the projection element.

4. The print head of claim 1, further comprising a heat sink disposed within the housing of the print head, wherein the projection element is further configured to direct a portion of the one or more laser beams to the heat sink disposed within the housing of the print head.

5. The print head of claim 1, further comprising a plurality of beam emitters configured to generate the one or more laser beams.

6. The print head of claim 1, wherein the one or more laser beams generated by the beam emitter is a free space laser beam.

7. The print head of claim 1, further comprising two or more projection elements disposed within the housing.

8. The print head of claim 1, wherein the consolidating optic is integrated into projection element.

9. An additive manufacturing apparatus comprising:
a build platform supporting a powdered build material, the powdered build material defining a build plane on the build platform; and
a print head including:
a housing;
a beam emitter configured to generate one or more laser beams;
a projection element disposed within the housing, the projection element configured to receive the one or more laser beams and project a plurality of projected laser beams in a pattern; and
a consolidating optic disposed within the housing and located below the projection element, the consolidating optic configured to consolidate the pattern of the plurality of projected laser beams into a consolidated pattern of projected laser beams;
wherein the print head is configured to direct the consolidated pattern of projected laser beams over the build plane and melt a portion of the powdered build material at the build plane with the consolidated pattern of projected laser beams.

10. The additive manufacturing apparatus of claim 9, wherein the print head further includes a collimator disposed within the housing, wherein the collimator is optically coupled to the beam emitter.

11. The additive manufacturing apparatus of claim 10, wherein the print head further includes a beam homogenizer disposed within the housing, wherein the beam homogenizer is optically coupled to the collimator.

12. The additive manufacturing apparatus of claim 11, wherein the print head further includes a turning optic disposed within the housing, wherein the turning optic is optically coupled to the beam homogenizer and is configured to direct the one or more laser beams to the projection element.

13. The additive manufacturing apparatus of claim 9, wherein the print head further includes one or more imaging optics disposed within the housing, wherein the one or more imaging optics is optically coupled to the projection element.

14. The additive manufacturing apparatus of claim 9, wherein the projection element is a digital micromirror device.

15. The additive manufacturing apparatus of claim 9, further comprising a computing device configured to control the pattern of the plurality of projected laser beams projected by the projection element.
